# EUROPÄISCHE PATENTSCHRIFT

(11) **EP 1 527 678 B1**
(45) Veröffentlichungstag und Bekanntmachung des Hinweises auf die Patenterteilung: **05.12.2007**
(21) Anmeldenummer: 04020645.0
(22) Anmeldetag: 31.08.2004
(51) Int. Cl.: A01K 5/00, B01F 7/24

(54) **Mischer**
Mixer
Mélangeur

(30) Priorität: 16.10.2003 DE 20315947 U
(43) Veröffentlichungstag der Anmeldung: 04.05.2005
(73) Patentinhaber: Trioliet Mullos B.V., 7575 BE Oldenzaal (NL)
(72) Erfinder: Van der Plas, Nicolaas, 7576 WX Oldenzaal (NL)
(74) Vertreter: Grünecker, Kinkeldey, Stockmair & Schwanhäusser Anwaltssozietät

(56) Entgegenhaltungen:
- EP-A- 1 175 828
- WO-A-03/009929
- DE-U1- 20 314 002

## Beschreibung

Die Erfindung bezieht sich auf einen Mischer, insbesondere einen Futtermischwagen, der im Oberbegriff des Anspruchs 1 erläuterten Art.

Ein derartiger Mischer ist aus der WO 03/009929 bekannt. Diese Druckschrift beschreibt einen Futtermischwagen, in dessen Inneren zwei rotierend antreibbare Mischwerkszeuge vorgesehen sind, die jeweils einen auf den Boden projizierten Arbeitskreis überstreichen. Zwischen den beiden Arbeitkreisen ist eine eine Durchtrittsöffnung für das zu mischende Gut freilassende Leiteinrichtung angeordnet, die am Übergang zum Boden der Krümmung des jeweiligen Arbeitskreises bis in den Zwickelbereich hinein folgt. Die Leiteinrichtung enthält zwei kegel- bzw. keilartige Formkörper, die sich von beiden Seitenwänden erstrecken, d.h. als gesonderte Bauteile ausgebildet und eingesetzt sind.

Ein aus der EP 1 175 828 A1 bekannter Mischer weist einen durch eine Wandung begrenzten Behälter mit einer im Inneren angeordneten Mischkammer auf. Die Mischkammer enthält einen Boden, von dem sich die Wandung nach oben und zumindest in den in Fahrtrichtung des Futtermischwagens vorderen und hinteren Teilen nach oben außen erstreckt. Die in Fahrtrichtung gesehen seitlichen Bereiche der Wandung sind abgeflacht, damit der Futtermischwagen auch enge Stallgassen passieren kann. Im Inneren der Mischkammer sind zwei, jeweils um eine senkrechte Achse rotierende Mischwerkzeuge, im dargestellten Ausführungsbeispiel die üblichen Mischschnecken, angeordnet. Die Mischwerkzeuge überstreichen jeweils einen Arbeitskreis auf dem Boden, wobei sich die Arbeitskreise beider Mischschnecken gerade nicht überlappen. Jede Mischschnecke fördert Gut zentral nach oben, worauf Gut entlang der Seitenwand wieder nach unten fließt. Zwischen den beiden Mischschnecken ist ein Durchlass vorgesehen, über den zu mischendes Gut, d.h. das Futter, auch aus dem Bereich einer Mischschnecke in den Bereich der benachbarten Mischschnecke transportiert wird. Dieser Durchlass wird beidseitig von in die Mischkammer eingesetzten, kegelförmigen Leiteinrichtungen flankiert über deren geneigte Begrenzungsflächen das von oben herabfließende Mischgut zum Teil zur anderen Mischschnecke abgezweigt wird, was die Durchmischung verbessert. Eingesetzte Leiteinrichtungen sind konstruktiv aufwendig und können bei Vorsehen ausreichend großer, gerader Seitenschieber zum Entleeren nicht verhindern, dass sich tote Ecken ausbilden, in denen Futter liegen bleibt.

In der nicht vorveröffentlichten DE 203 14 002 U ist bereits ein Futtermischwagen beschrieben, dessen Wandung im Bereich des Bodens der Krümmung des Arbeitskreises folgt. Dieser Futtermischwagen ist weiterhin mit einer seitlichen Austragsöffnung versehen, die mit einem Schieber zu verschließen ist. Auch der Schieber folgt in seinem unteren Bereich der Krümmung des Arbeitskreises, so dass hier keine toten Ecken verbleiben. Der bekannte Mischwagen ist jedoch lediglich mit einer einzigen, um eine vertikale Achse rotierenden Mischschnecke ausgerüstet, was die Konstruktion stark vereinfacht.

Der Erfindung liegt somit die Aufgabe zugrunde, einen Mischer der genannten Art so weiterzubilden, dass "tote Ecken" auf konstruktiv einfache Weise auch bei mit mehreren Mischwerkzeugen ausgebildeten Mischern verhindert werden können.

Die Aufgabe wird durch die im Anspruch 1 angegebenen Merkmale gelöst.

Durch die erfindungsgemäße Ausgestaltung folgt die Wandung der Krümmung des Arbeitsbereiches bis in den Zwickelbereich hinein, so dass "tote Ecken" sicher vermieden werden können. Auf konstruktiv einfache Weise kann dadurch auch die Leiteinrichtung durch die Wandung mit oder ohne Verlängerung gebildet werden. Die sich durch die eingezogene Wandung im Zwickelbereich bildende Vertiefung an der Außenseite der Mischkammer befindet sich an einer Stelle, die normalerweise mit einer Abflachung versehen ist. Auch hier wird somit die Konstruktion vereinfacht, da eine zusätzlich angebrachte Abflachung nicht mehr notwendig ist.

Vorteilhafte Weiterbildungen der Erfindung sind den Unteransprüchen zu entnehmen.

Durch die erfindungsgemäß Ausgestaltung kann auch bei einem Mischer mit mehreren Mischwerkzeugen ein gekrümmter Schieber verwendet werden, wie er zum Verhindern von toten Ecken in der DE 203 14 002 U1 beschrieben wurde, wobei auch hier die Führung des Schiebers an gekrümmten Bereichen der Wandung angeordnet werden kann, so dass dieser einfach zu öffnen ist.

Die Leiteinrichtung kann, bevorzugt durch die Wandung allein, in Form eines symmetrischen Leitkegels ausgebildet sein, sie kann jedoch auch, bevorzugt durch eine Kombination der Wandung und einer Verlängerung, einen asymmetrischen Leitkegel bilden.

Diese Vertiefung kann gegebenenfalls von außen durch eine Blechkonstruktion abgedeckt werden.

Die Konstruktion kann weiter vereinfacht werden, wenn Abflachungen, die den beiden Arbeitskreisen jeweils zugeordnet sind, über einen Steg miteinander verbunden werden.

Die Konstruktion der Wandung erfolgt bevorzugt über eine imaginäre Durchdringung oder Verschneidung wenigstens zweier gekrümmter Einzelwandungen, die jeweils um einen Arbeitskreis herum gekrümmt sind, von dort nach außen oben zum Ausbilden einer gegenüber dem Boden vergrößerten Befüllöffnung verlaufen, und mit einer seitlichen Abflachung versehen sind, wobei die Einzelwandungen einander durchdringend oder verschneidend so zusammengesetzt sind, dass sich die jeweiligen Arbeitskreise gerade nicht überlappen, und sich im jeweiligen Zwickelbereich durch die Wandung mit oder ohne Verlängerung unter Freilassung der Durchtrittsöffnung zwischen den beiden Arbeitskreisen eine Leiteinrichtung ausbildet, die die Durchtrittsöffnung flankiert.

Ausführungsbeispiele der Erfindung werden nachfolgend anhand der Zeichnungen näher erläutert. Es zeigen:
- Fig. 1: ein erstes Ausführungsbeispiel der Erfindung in perspektivischer Draufsicht,
- Fig. 2: eine Draufsicht auf das Ausführungsbeispiel nach Fig. 1 im Teilschnitt entlang der Linie II-II,
- Fig. 3A, 3B: das Konstruktionsprinzip gemäß der vorliegenden Erfindung,
- Fig. 4: eine Darstellung ähnlich Fig. 1 eines weiteren Ausführungsbeispiels der Erfindung, und
- Fig. 5: eine Darstellung ähnlich Fig. 1 eines dritten Ausführungsbeispiels der Erfindung.

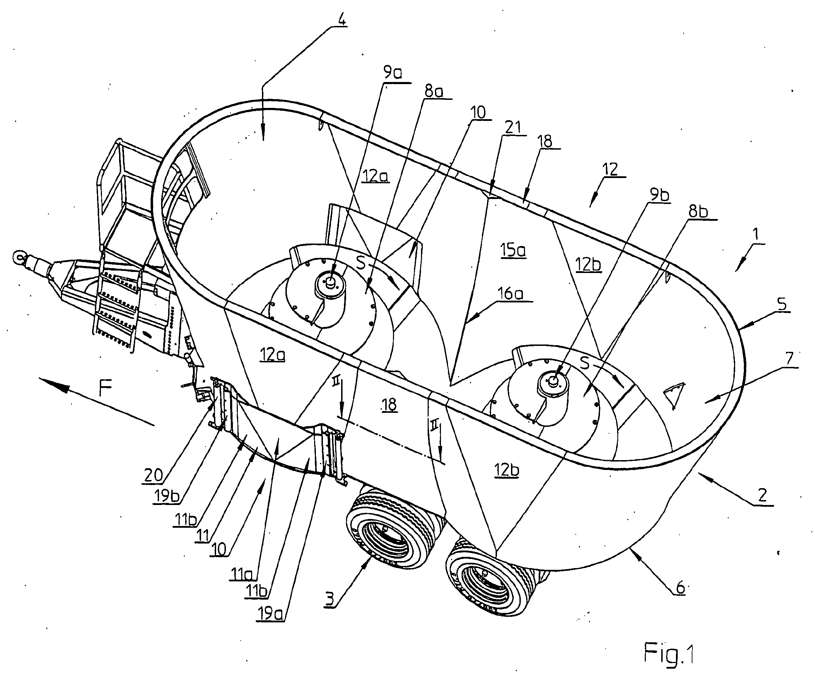

Aus Fig. 1 ist ein Mischer 1 ersichtlich, der im dargestellten Ausführungsbeispiel als Mischwagen für Tierfutter ausgebildet ist. Der Mischer 1 enthält einen Mischbehälter 2, der auf einem Fahrgestell 3 befestigt ist und mit Hilfe eines Zugfahrzeuges, wie beispielsweise eines Schleppers oder dgl., in Fahrtrichtung F auch in einer Stallgasse oder dgl., z.B. mittels einer Zugdeichsel, verfahrbar ist. Der Behälter 2 enthält eine Mischkammer 4, die von einer flächigen Wandung 5 aus Metallblech oder dgl. und einem Boden 6 begrenzt ist. Der Behälter 2 ist mit einer oberen Öffnung 7 versehen, über die das Mischgut, d.h. insbesondere das Futter, in die Mischkammer 4 eingebracht werden kann. Im dargestellten Ausführungsbeispiel ist die Befüllöffnung 7 vollständig offen. Sie könnte jedoch auch ganz oder teilweise durch eine Abdeckung abgedeckt sein.

Im Inneren der Mischkammer 4 sind zwei in Fahrtrichtung F hintereinanderliegend angeordnete Mischwerkzeuge 8a bzw. 8b vorgesehen. Die Mischwerkzeuge 8a, 8b rotieren jeweils um eine Achse 9a, 9b, die senkrecht zum Boden 6 verläuft. Die Drehrichtung der beiden Mischwerkzeuge 8a, 8b ist im dargestellten Ausführungsbeispiel gleichsinnig und erfolgt in Richtung des Pfeiles S. Dadurch überstreichen die Mischwerkzeuge 8a, 8b auf dem Boden 6 jeweils einen Arbeitskreis A. Im dargestellten Ausführungsbeispiel sind die Mischwerkzeuge 8a, 8b Vertikalschnecken, wie sie in vielfältiger Konstruktion bei Futtermischern bevorzugt sind. Die beiden Drehachsen 9a und 9b der Mischwerkzeuge 8a, 8b sind in Fahrtrichtung F so weit voneinander beabstandet, dass sich die Arbeitskreise A der beiden Mischwerkzeuge 8a, 8b gerade nicht überlappen.

Neben dem in Fahrtrichtung F vorderen Mischwerkzeug 8a (die vordere Seite des Mischers 1 wird auch durch die Lage der Zugdeichsel bestimmt), befindet sich wenigstens eine seitliche Austragsöffnung 10, die durch einen Schieber 11 verschlossen ist. Im dargestellten Ausführungsbeispiel sind zwei Austragsöffnungen 10 vorgesehen, die in Höhe der Drehachse 9a und sich beidseitig der Drehachse 9a diametral gegenüberliegend, die Wandung 5 durchbrechend, angeordnet sind.

Beim Betrieb des erfindungsgemäßen Mischers 1 wird das Mischgut über die Öffnung 7 in die Mischkammer 4 eingebracht und dort durch die gleichsinnige Drehung der beiden Vertikalschnecken nach oben transportiert, fällt am oberen Ende der Vertikalschnecken wieder nach unten und wird darüber hinaus von einer Vertikalschnecke auf die andere übergeben, wobei Mischgut, das bei dieser Bewegung eine geöffnete Austragsöffnung 10 erreicht, durch diese kontinuierlich ausgegeben wird.

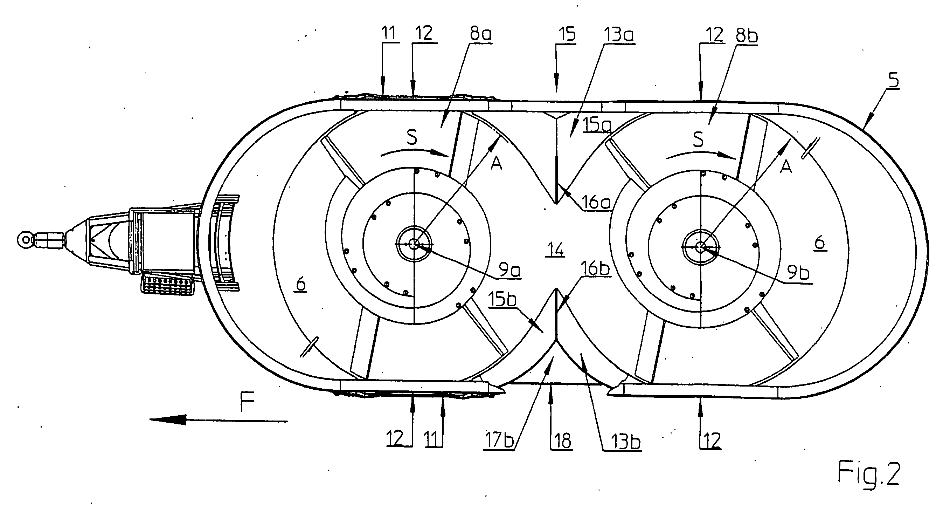

Wie auch ein Vergleich mit Fig. 2 zeigt, folgt der Übergang zwischen der Wandung 5 und dem Boden 6 der Krümmung des Arbeitskreises A, d.h. der Übergang zwischen Boden und Wandung ist mit einem Radius gekrümmt, der im Wesentlichen gleich oder geringfügig größer ist als der Radius des Arbeitskreises A, so dass sich das Mischwerkzeug 8a bzw. 8b ungehindert über den Boden 6 drehen kann, auf dem Boden 6 zwischen der Wandung 5 und dem Mischwerkzeug 8a bzw. 8b jedoch kaum Mischgut liegen bleiben kann.

Die Wandung 5 erstreckt sich im vorderen und hinteren Bereich des Behälters 3 schräg nach oben außen, so dass die Einfüllöffnung 7 größer ist als der Umriss des Bodens 6. Der Neigungswinkel der Wandung 5 ist in Verlängerung einer Verbindungslinie zwischen den Drehachsen 9a, 9b, die parallel zur Fahrtrichtung F verläuft, am größten und verringert sich mit zunehmendem Abstand von dieser Verbindungslinie, bis zu einer dreieckigen, seitlich platzierten Abflachung 12a, 12b, die eben ist, mit ihrer Spitze den Boden 6 berührt und sich im Wesentlichen senkrecht zum Boden 6 erstreckt. Durch die Abflachung 12 wird die Breite des Behälters 2 quer zur Fahrt F so weit verringert, dass auch enge Stallgassen durchfahren werden können.

Im mittleren Bereich der Mischkammer 4, wo sich die beiden Arbeitskreise A der beiden Mischwerkzeuge 8a, 8b aneinander annähern, bilden sich (Fig. 2) seitliche Zwickelbereiche 13a, 13b. Auch in diesen seitlichen Zwickelbereichen folgt die Wandung 5 am Übergang zum Boden 6 der Krümmung des Arbeitskreises A; und zwar so weit, dass beidseitig einer Verbindungslinie zwischen den beiden Drehachsen 9a und 9b ein Durchlass 14 verbleibt, über den das Mischgut zwischen den beiden Mischwerkzeugen 8a, 8b hin- und hertransportiert werden kann. Die Wandung 5 folgt somit über mehr als die Hälfte des Umfangs der Arbeitskreise A deren Krümmung, wobei der Durchlass 14 eine für eine ungehinderte Übergabe des Mischgutes ausreichende Breite aufweist und bevorzugt etwa über ein Drittel des Querschnittes an dieser Stelle reicht.

Die Wandung 5 bildet in beiden Zwickelbereichen eine Leiteinrichtung 15, die im dargestellten Ausführungsbeispiel zwei zu einer Verschneidungskante 16a, 16b symmetrische Leitkegel 15a und 15b umfasst, die identisch ausgebildet und dimensioniert sind und den Durchlass 14 an beiden Seiten flankieren. Zum Ausbilden dieser Leitkegel 15a, 15b wird die Wandungsneigung mit zunehmendem Abstand von der Abflachung 12 wieder erhöht.

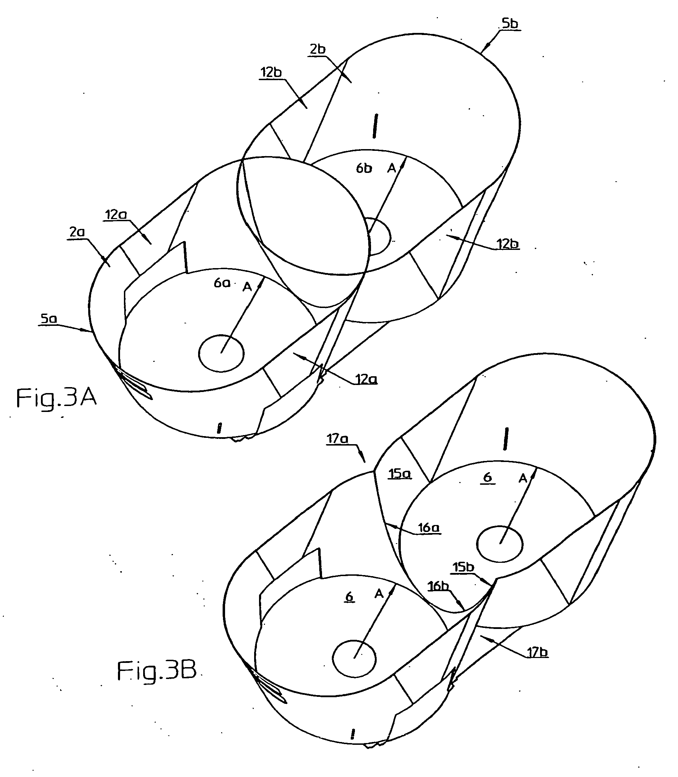

Das Konstruktionsprinzip der Wandung 5 des Behälters 2 wird anhand der Fig. 3A und 3B näher erläutert. Ausgangspunkt sind zwei imaginäre, identische Einzelbehälter 2a bzw. 2b, die jeweils einen Boden 6a und 6b, einen auf den Boden projizierten Arbeitskreis A sowie eine Wandung 5a und 5b aufweisen. Die Wandungen 5a, 5b folgen im Übergang zum jeweiligen Boden 6a, 6b der Krümmung des Arbeitskreises A, d.h. sind mit einem Radius gekrümmt, der im Wesentlichen gleich oder geringfügig größer ist als der Radius des Arbeitskreises A. Die Wandungen 5a, 5b sind jeweils mit übereinstimmenden, seitlichen Abflachungen 12a und 12b versehen, die im Wesentlichen senkrecht zu den Böden 6a bzw. 6b verlaufen, sind außerhalb der Abflachungen 12a, 12b gekrümmt und erstrecken sich außerhalb der Abflachungen mit einem mit zunehmendem Abstand zu den Abflachungen 12a, 12b größer werdenden Neigungswinkel vom Boden 6a, 6b nach schräg oben außen.

Diese beiden Einzelbehälter 2a, 2b werden dann zum Behälter 2 kombiniert, in dem man die beiden Einzelbehälter 2a, 2b imaginär in Richtung der Verbindungslinie der Schneckenachsen so weit zusammen oder ineinanderschiebt, dass sich die Arbeitskreise A in einem der Bereiche mit der größten Neigung der Wandung 5, gerade nicht überlappen und sich die Wandungen 5a, 5b in diesem Bereich sozusagen durchdringen oder verschneiden. Dann wird zum Ausbilden der Durchtrittsöffnung 14 jeder Bereich der Wandung 5a bzw. 5b jenseits der Durchdringungs- oder Verschneidungslinie entfernt, so dass sich die Leitkegel 15a bzw. 15b symmetrisch beidseitig der Durchdringungslinie ausbilden, wobei die Durchdringungslinie oder Verschneidungskante als gekrümmte Scheitellinie 16a bzw. 16b der jeweiligen Leitkegel 15a, 15b verbleibt.

Dadurch dass die Wandung 5 des Gesamtbehälters 2 der Krümmung der jeweiligen Arbeitskreise bis zur Durchtrittsöffnung 14 folgt, bildet sich an der Außenseite der Wandung 5 in den Zwickelbereichen 13a, 13b jeweils eine Vertiefung 17a, 17b, die durch eine Abdeckung 18 (z.B. Fig. 1) verschlossen werden kann. Es ist weiterhin möglich, den Boden 6 auch unterhalb der Leitkegel 15a, 15b vorzusehen, so dass keiner der Einzelbehälter 2a, 2b einen teilweise kreisförmigen Boden aufweist.

Die Austragsöffnungen 10 erstrecken sich mit ihren Breiten im dargestellten Ausführungsbeispiel über eine Abflachung 12a, 12b und beidseitig der Abflachung bis in die gekrümmten und geneigten Bereiche der Wandung 5 hinein. Zum Verschließen jeder Austragsöffnung 10 ist ein Schieber 11 vorgesehen, der in seiner Form und konstruktiven Ausgestaltung im Wesentlichen demjenigen Stück der Wandung 5 entspricht, das zum Ausbilden der Austragsöffnung 10 aus der Wandung 5 entfernt wurde. Insbesondere weist der Schieber 11 einen abgeflachten Bereich 11 a sowie beidseitig des abgeflachten Bereiches angeordnete, gekrümmte Wandungsbereiche 11 b auf, die, bei Anordnung der Austragsöffnung 10 unmittelbar am Übergang zum Boden 6, in ihrem unteren Bereich ebenfalls der Krümmung des Arbeitskreises A folgen. Auf diese Weise werden im Bereich und neben der Austragsöffnung 10 tote Ecken vermieden, in denen Mischgut liegen bleiben könnte.

Der Schieber 11 läuft beidseitig in Führungen 19a und 19b, die in den gekrümmten Bereichen der Wandung 5 beidseitig der Abflachung 12a, 12b vorgesehen sind. Die Führungen 19a, 19b sind so angebracht, dass sie den Schieber 11 bei seiner Bewegung nach oben zum Öffnen der Austragsöffnung 10 unter einem Neigungswinkel bewegen, der dem Neigungswinkel der Wandung 5 im Bereich der Führungen 19a, 19b in etwa entspricht. Der Schieber 11 wird über ein Betätigungsmittel 20 bewegt, das bevorzugt eine ggfs. ebenfalls geneigte Kolben-Zylinder-Einheit ist.

Die Konstruktion und die Art und Weise, wie der Schieber 11 bewegt wird, ist bereits im nicht vorveröffentlichten DE-GM 203 14 002 für einen Mischer mit einer einzigen Vertikalschnecke beschrieben, dessen Offenbarungsgehalt hiermit durch Bezugnahme eingeschlossen wird.

Durch die erfindungsgemäße Ausgestaltung mit der im Zwickelbereich zwischen benachbarten Arbeitskreisen von Mischwerkzeugen nach innen gekrümmten, eingezogenen Wandung wird sichergestellt, dass der dort beschriebene, gekrümmte und somit tote Ecken vermeidende Schieber auch bei Mischern mit mehr als einem Mischwerkzeug eingesetzt werden kann, ohne dass es Probleme gibt, die näher an der Mitte liegende Führung 19a am gleichen geneigten und gekrümmten Wandbereich anzubringen, wie die gegenüberliegende, näher am Ende des Behälters liegende Führung 19b. Es sei daran erinnert, dass bei herkömmlichen Mischern, beispielsweise gemäß der EP 1 175 828, an derjenigen Stelle, an der sich im Ausführungsbeispiel nach Fig. 1 die Führung 19a befindet, eine nicht gekrümmte, im Wesentlichen senkrecht verlaufende Wandung verläuft.

Im dargestellten Ausführungsbeispiel gemäß den Fig. 1 bis 3 erstrecken sich die Leitkegel 15a, 15b bis zur Einfüllöffnung 7, d.h. bis zum oberen Rand der Wandung 5, wobei am oberen Rand der Wandung 5 jeweils ein kleines Dreieck 21 gebildet ist, auf dem beim Einfüllen Mischgut liegen bleiben kann. Außerdem ist die Abdeckung dieses Dreiecks 21 konstruktiv aufwendig.

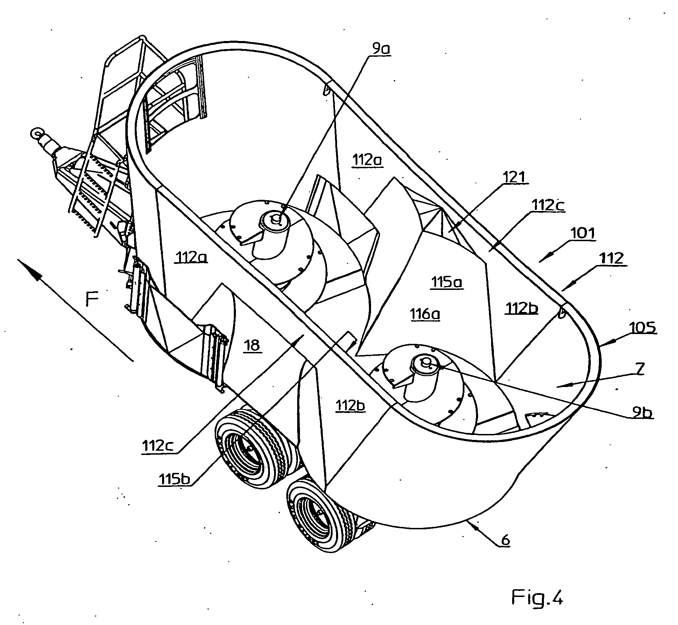

Um dies zu vermeiden, zeigt Fig. 4 ein weiteres Ausführungsbeispiel eines erfindungsgemäßen Mischers 101, der bis auf die nachstehend beschriebenen Einzelheiten identisch ist mit dem Mischer nach Fig. 1, wobei gleiche bzw. vergleichbare Bauteile mit den gleichen Bezugszeichen gekennzeichnet und nicht nochmals erläutert sind.

Der Mischer 101 weist eine Wandung 105 auf, die seitlich abgeflacht ist, wobei jede seitliche Abflachung 112. in Fahrtrichtung F rechts und links der jeweiligen Drehachsen 9a, 9b mit einem dreieckigen Bereich 112a, 112b ausgebildet ist. Die Spitzen der dreieckigen Bereiche liegen am Übergang zum Boden 6, während die Basis der dreieckigen Bereiche den oberen Rand der Wandung 105 an der Einfüllöffnung 7 bilden. Die dreieckigen Bereiche 112a, 112b sind hier über einen Steg 112c miteinander verbunden, wobei auch der Steg die obere Begrenzung der Wandung 105 bildet und die beiden Dreiecke 112a, 112b entlang deren Basen geradlinig verbindet.

Die Wandung 105 ist, analog wie im ersten Ausführungsbeispiel, im Zwickelbereich zwischen den beiden Arbeitskreisen bogenförmig nach innen eingezogen und bildet die Leiteinrichtung in Form zweier symmetrischer Leitkegel 115a und 115b (verdeckt). Die Leitkegel 115a, die durch die Wandung 105 gebildet werden, enden hier etwa im Bereich des Steges 112c und sind dort mit einem Deckkegel 121 abgedeckt, der in üblicher Weise, wie in der Zeichnung dargestellt, aus verschiedenen geraden Blechdreiecken zusammengesetzt ist und seine Spitze unterhalb des oberen Randes hat. Auch bei diesem Ausführungsbeispiel sind die Begrenzungswände der Leitkegel 115a, 115b analog der Wandung 105 gekrümmt und geneigt, während die Scheitellinie 116a, 116b, die gleichzeitig die Symmetrielinie für die Leitkegel 115a, 115b bildet, einer Durchdringungslinie zweier Einzelbehälter ähnlich den Fig. 3A, 3B folgt.

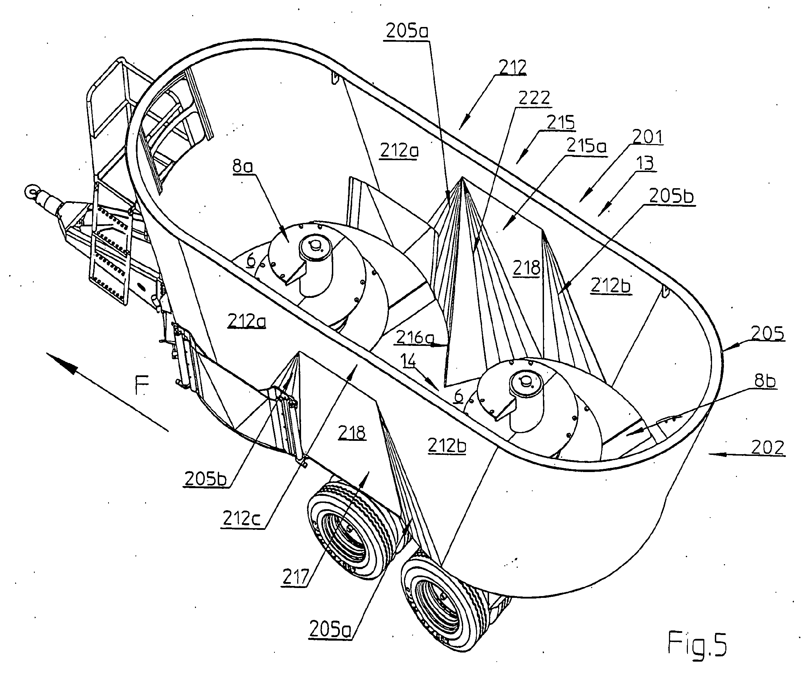

Fig. 5 zeigt ein weiteres Ausführungsbeispiel eines erfindungsgemäßen Mischers 201, der bis auf die nachfolgend beschriebenen Einzelheiten den Mischern 1 bzw. 101 entspricht, wobei für gleiche bzw. vergleichbare Bauteile die gleichen Bezugszeichen verwendet und diese nicht nochmals erläutert wurden.

Der Mischer 201 unterscheidet sich vom Mischer 1 durch eine abweichende Ausgestaltung seiner Leiteinrichtungen 215. Die Wandung 205 des Mischers 201 enthält seitlich angeordnete Abflachungen 212, die auch bei diesem Ausführungsbeispiel jeweils einen vorderen und einen hinteren dreieckigen Bereich 212a und 212b und einen verbindenden Steg 212c aufweisen, wie dies auch im Ausführungsbeispiel nach Fig. 4 beschrieben wurde.

Die Leiteinrichtung 215 im Zwickelbereich 13 zwischen den beiden Arbeitskreisen A enthält jedoch asymmetrische Leitkegel, von denen lediglich der Leitkegel 215a dargestellt ist, während der gegenüberliegende Leitkegel in der Zeichnung verdeckt ist, jedoch identisch und spiegelbildlich ausgebildet ist. Der stellvertretend für beide Leitkegel beschriebene Leitkegel 215a folgt am Übergang zum Boden 6 der Krümmung des Arbeitskreises A, in gleicher Weise, wie das bereits bei den vorangegangenen Ausführungsbeispielen beschrieben wurde. Im Anschluss an die jeweiligen dreieckigen Bereiche 212a und 212b der Abflachung 212 sind speziell geformte Wandungsbereiche 205a, 205b vorgesehen, die zum Zwickelbereich 13 hinführen und ähnlich wie in den vorhergehenden Ausführungsbeispielen durch ein gekrümmtes und/oder geneigtes Design der Wandung 205 der jeweiligen Einzelbehälter gebildet wurden, so dass sich an der Außenseite des Behälters 202 die bereits beschriebene Vertiefung 217b (217a verdeckt) ausbildet. Die Vertiefung 217 wird durch eine Abdeckung 218 abgeschlossen, die als ebenes Blech ausgebildet ist, nach oben bis zum Steg 212c der Abflachung 212 reicht und schräg nach innen unten geneigt eingebaut ist. An dieser Abdeckung 218 endet der Wandungsbereich 205a, bzw. 205b, der dem rechten hinteren Mischwerkzeug 8b bzw. dem linken vorderen Mischwerkzeug 8a zugeordnet ist. Der in Fig. 5 als Innenansicht gezeigte Wandungsbereich 205b ist etwa dreieckig und konkav, wobei die Basis am Übergang zum Boden 6 anliegt, und ein Schenkel durch die hintere, dreieckige Abflachung 212b und der zweite Schenkel durch die nach hinten weisende Kante der Abdeckung 218 begrenzt wird. Am Berührungspunkt der Wandungsfläche 205b mit dem Boden 6 beginnt eine zweite, ebenfalls im Wesentlichen dreieckige ggfs. konkave Leitfläche 222, deren Basis am Übergang zum Boden 6 der Krümmung des Arbeitskreises des hinteren bzw. vorderen Mischwerkzeuges 8b, 8a folgt, die jedoch flacher, d.h. stärker nach vom geneigt ist, als dies bei dem Wandungsbereich 205b der Fall ist. Die Leitfläche 222 wird an der nach hinten weisenden Kante durch die Abdeckung 218 begrenzt und endet mit ihrer Spitze unterhalb des oberen Randes am Übergang zwischen dem vorderen dreieckigen Bereich 212a der Abflachung 212 und dem Steg 212c.

Im Bereich des vorderen Mischwerkzeuges 8a kann der Wandungsbereich 205a bis zur Durchtrittsöffnung 14 durchlaufen und mit der Leitfläche 222 zusammentreffen und eine Scheitellinie 216a des Leitkegels 215 bilden. Alternativ schließt sich an die Wandungsfläche 205a eine weitere Fläche an, die an ihrer Basis am Übergang zum Boden 6 ebenfalls der Krümmung des Arbeitskreises A des vorderen Mischwerkzeuges 8a folgt, jedoch eine Neigung zum Boden aufweist, die von der Neigung des Wandungsbereichs 205a abweicht. Die Neigung ist bevorzugt steiler, wie dies auch in Fig. 5 gezeigt ist. Auf diese Weise werden die Vorteile der erfindungsgemäßen Ausgestaltung auch für Mischer nutzbar, die trotz seitlicher Durchtrittsöffnungen 14 mit asymmetrischen Leitkegeln versehen sind, wie dies beispielsweise in der EP 1 175 828 beschrieben wurde.

In Abwandlung der beschriebenen und gezeichneten Ausführungsbeispiele können Einzelheiten der Ausführungsbeispiele untereinander ausgetauscht werden. So ist es beispielsweise möglich, asymmetrische Leitkegel auch bei Abflachungen ohne Steg einzusetzen. Die Erfindung ist weiterhin analog anwendbar auf andere Mischertypen oder auf Mischer mit mehr als zwei Mischwerkzeugen, wobei zwischen jedem der Mischwerkzeuge die Wandung wie beschrieben eingezogen werden kann. Die Lagen der Austragsöffnungen sind nicht auf die beschriebenen Positionen beschränkt, sondern es sind nach Bedarf auch andere Positionen möglich. Auch die Mischwerkzeuge können anders ausgebildet sein als gezeigt.

## Patentansprüche

1. Mischer (1, 101, 201), insbesondere Futtermischwagen, mit einer von oben befüllbaren Mischkammer (4), die eine Wandung (5, 105, 205), einen Boden (6) und wenigstens zwei im Inneren der Mischkammer (4) angeordnete, rotierend antreibbare Mischwerkzeuge (8a, 8b) enthält, die jeweils einen auf den Boden (6) projizierten Arbeitskreis (A) überstreichen, wobei in Zwickelbereichen (13) zwischen zwei Arbeitskreisen (A) eine Durchtrittsöffnung (14) freilassende Leiteinrichtungen (15, 115, 215) angeordnet sind, die am Übergang zum Boden (6) der Krümmung des jeweiligen Arbeitskreises (A) bis in den Zwickelbereich (13) zwischen zwei Arbeitskreisen (A) folgen, **dadurch gekennzeichnet, dass** die Wandung (5, 105, 205) in den Zwickelbereichen (13) nach innen gekrümmt ist und eine Vertiefung (17, 217) an der Außenseite der Mischkammer (4) bildet, wobei die Wandung (5, 105, 205) selbst ohne oder mit einer Wandungsverlängerung (218, 222) die jeweilige Leiteinrichtung (15, 115, 215) bildet.

2. Mischer nach Anspruch 1, **dadurch gekennzeichnet, dass** die Wandung (5, 105, 205) von einer Austragsöffnung (10) mit Schieberverschluss (11) durchbrochen ist, wobei der Schieber (11) am Übergang zum Boden (6) der Krümmung des Arbeitskreises (A) folgt.

3. Mischer nach Anspruch 2, **dadurch gekennzeichnet, dass** der Schieber (11) in seitlichen Führungen (19a, 19b) geführt ist, die an gekrümmten Bereichen der Wandung (5, 105, 205) angeordnet sind.

4. Mischer nach einem der Ansprüche 1 bis 3, **dadurch gekennzeichnet, dass** die Wandung (5, 105), 205) der Krümmung zweier benachbarter Arbeitskreise (A) bis zu einer Durchlassöffnung (14) am Übergang von einem Mischwerkzeug (8a, 8b) zum benachbarten Mischwerkzeug (8b, 8a) zum Ausbilden eines symmetrischen Leitkegels (15a, 15b, 115a, 115b) folgt.

5. Mischer nach einem der Ansprüche 1 bis 3, **dadurch gekennzeichnet, dass** die Wandung (205) im Zwickelbereich (13) mit einer Verlängerung (218, 222) zum Ausbilden eines asymmetrischen Leitkegels (215a) verbunden ist und die Verlängerung (222, 218) am Übergang zum Boden (6) der Krümmung des Arbeitskreises (A) folgt.

6. Mischer nach einem derAnsprüche 1 bis 5, **dadurch gekennzeichnet, dass** die Vertiefung (17) durch eine Abdeckung bzw. Verlängerung (18, 218) abgedeckt ist.

7. Mischer nach einem der Ansprüche 1 bis 6, **dadurch gekennzeichnet, dass** der Boden (6) im Bereich jedes Arbeitskreises (A) bis über die Hälfte seines Umfangs im Wesentlichen kreisförmig ist, dass die Wandung (5, 105, 205) am Übergang zum Boden (6) kreisbogenförmig gekrümmt ist und sich vom Boden (6) schräg nach oben außen neigt, und dass die Wandung (5, 105, 205) seitlich mit jeweils einer Abflachung (12, 112, 212) versehen ist, die parallel zu einer Tangente zum Arbeitskreis (A) des jeweils anliegenden Mischwerkzeuges (8a, 8b) verläuft und beidseitig von gekrümmten Bereichen der Wandung (5, 105, 205) begrenzt ist.

8. Mischer nach Anspruch 7, **dadurch gekennzeichnet, dass** die zwei benachbarten Arbeitskreise (A) zugeordneten Abflachungen (112a, 112b, 212a, 212b) im oberen Bereich der Wandung über einen Steg (112c, 212c) miteinander verbunden sind.

9. Mischer nach einem der Ansprüche 1 bis 8, **dadurch gekennzeichnet, dass** die Wandung (5, 105, 205) konstruiert ist aus wenigstens zwei Einzelbehältern (2a, 2b) mit jeweils einem Boden (6) und einer Wandung (5a, 5b), wobei jede Wandung um einen Arbeitskreis (A) gekrümmt sind, sich vom Boden (6) nach oben außen zum Ausbilden einer gegenüber dem Boden (6) vergrößerten Befüllöffnung (7) neigt und mit einer seitlichen Abflachung (12, 112, 212) versehen ist, wobei die Wandungen (5a, 5b) einander durchdringend oder miteinander verschnitten so zusammengesetzt sind, dass sich die jeweiligen Arbeitskreise (A) gerade nicht überlappen und sich im Zwickelbereich (13) durch die Wandung (5a, 5b) mit oder ohne Verlängerung (218, 222) unter Freilassung einer Durchtrittsöffnung (14) die jeweilige Leiteinrichtung (15, 115, 215) ausbildet.

## Claims

1. A mixer (1,101,201,), in particular a fodder mixing cart, with a mixing chamber (4) which can filled from above and which includes a wall (5,105,205), a bottom (6) and at least two mixing implements (8a,8b) which are arranged in the interior of the mixing chamber (4), can be driven in rotating motion and which each describe a working circle (A) projected on the bottom (6), wherein guide means (15, 115, 215) leaving free a passage opening (14) are provided in wedge zones (13) between two working circles (A), which guide means at the transition into the bottom (6) follow the curvature of the respective working circle (A) as far as into the wedge zone (13) between two working circles (A), **characterised in that** the wall (5,105,205) in the wedge zones (13) is inwardly curved and forms a recess (17,217) on the outside of the mixing chamber (4), wherein the wall (5,105,205) itself forms the respective guide means (15,115,215) with or without a wall extension (218,222).

2. A mixer according to Claim 1, **characterised in that** the wall (5,105,205) is pierced by a discharge opening (10) with a sliding closure (11), wherein the slider (11) follows the curvature of the working circle (A) at the transition into the bottom (6).

3. A mixer according to Claim 2, **characterised in that** the slider (11) is guided in lateral guides (19a,19b) which are arranged on curved portions of the wall (5,105,205).

4. A mixer according to any one of Claims 1 to 3, **characterised in that** the wall (5,105,205) follows the curvature of two adjacent working circles (A) up to a passage opening (14) at the transition from a mixing implement (8a,8b) into the adjacent mixing implement (8a,8b) so as to form a symmetrical guide cone (15a,15b,115a,115b).

5. A mixer according to any one of Claims 1 to 3, **characterised in that**, in the wedge zone (13), the wall (205) is connected to an extension (218,222) so as to form an asymmetrical guide cone (215a) and at the transition into the bottom (6) the extension (222,218) follows the curvature of the working circle (A).

6. A mixer according to any one of Claims 1 to 5, **characterised in that** the recess (17) is covered by a covering or extension (18,218).

7. A mixer according to any one of Claims 1 to 6, **characterised in that** the bottom (6) is substantially circular in the vicinity of each working circle (A) up to over half its circumference, **in that** the wall (5,105,205) is curved in a circular arc at the transition into the bottom (6) and is inclined obliquely upwards and outwards from the bottom (6), and **in that** the wall (5,105,205) is provided laterally with a respective flat portion (12,112,212) which extends parallel to a tangent to the working circle (A) of the respective adjacent mixing implement (8a,8b) and is bounded on both sides by curved portions of the wall (5,105,205).

8. A mixer according to Claim 7, **characterised in that** the flat portions (112a,112b,212a,212b) associated with two adjacent working circles (A) are joined together in the upper zone of the wall via a web (112c,212c).

9. A mixer according to any one of Claims 1 to 8, **characterised in that** the wall (5,105,205) is constructed from at least two individual containers (2a,2b) with a respective bottom (6) and a wall (5a,5b), wherein each wall is curved about a working circle (A), is inclined upwardly and outwardly from the bottom (6) to form a filling aperture (7) which is enlarged with respect to the bottom (6) and is provided with a lateral flat portion (12,112,212), wherein the walls (5a,5b) are so assembled intersecting one another or blending with one another that the respective working circles (A) do not directly overlap and in the wedge zone (13) the respective guide means (15,115,215) is formed by the wall (5a,5b) with or without an extension (218,222) leaving free a passage opening (14).

## Revendications

1. Mélangeur (1, 101, 201), en particulier wagon mélangeur de fourrage, comprenant un compartiment de mélange (4) chargeable à partir du haut, qui comporte une paroi (5, 105, 205), un fond (6) et au moins deux outils de mélange (8a, 8b) entraînables en rotation, disposés à l'intérieur du compartiment de mélange (4), lesquels outils balayent chacun un cercle de travail (A) projeté sur le fond (6), des dispositifs de guidage (15, 115, 215), qui dégagent une ouverture de passage (14), étant disposés dans des zones d'encoignure (13) entre deux cercles de travail (A), lesquels dispositifs suivent à la transition avec le fond (6) la courbure du cercle de travail respectif (A) jusque dans la zone d'encoignure (13) entre deux cercles de travail (A), **caractérisé en ce que** la paroi (5, 105, 205) est cintrée vers l'intérieur dans les zones d'encoignure (13) et forme un évidement (17, 217) sur le côté extérieur du compartiment de mélange (4), la paroi (5, 105, 205) elle-même formant le dispositif de guidage respectif (15, 115, 215) sans ou avec un prolongement de paroi (218, 222).

2. Mélangeur suivant la revendication 1, **caractérisé en ce que** la paroi (5, 105, 205) est traversée par une ouverture de décharge (10) avec fermeture à tiroir (11), le tiroir (11) suivant la courbure du cercle de travail (A) à la transition avec le fond (6).

3. Mélangeur suivant la revendication 2, **caractérisé en ce que** le tiroir (11) est guidé dans des glissières latérales (19a, 19b), disposées sur des zones cintrées de la paroi (5, 105, 205).

4. Mélangeur suivant l'une des revendications 1 à 3, **caractérisé en ce que** la paroi (5, 105, 205) suit la courbure de deux cercles de travail voisins (A) jusqu'à une ouverture de passage (14) à la transition d'un outil de mélange (8a, 8b) avec l'outil de mélange voisin (8b, 8a) pour la réalisation d'un cône de guidage symétrique (15a, 15b, 115a, 115b).

5. Mélangeur suivant l'une des revendications 1 à 3, **caractérisé en ce que** la paroi (205) est reliée dans la zone d'encoignure (13) à un prolongement (218, 222) pour la réalisation d'un cône de guidage asymétrique (215a), et le prolongement (222, 218) suit la courbure du cercle de travail (A) à la transition avec le fond (6).

6. Mélangeur suivant l'une des revendications 1 à 5, **caractérisé en ce que** l'évidement (17) est recouvert par un couvercle ou un prolongement (18, 218).

7. Mélangeur suivant l'une des revendications 1 à 6, **caractérisé en ce que** le fond (6) est essentiellement circulaire dans la zone de chaque cercle de travail (A) jusqu'à la moitié de son pourtour, que la paroi (5, 105, 205) est cintrée en arc de cercle à la transition avec le fond (6) et s'incline à partir du fond (6) en oblique vers le haut et vers l'extérieur, et que la paroi (5, 105, 205) est munie latéralement d'un méplat respectif (12, 112, 212), qui s'étend parallèlement à une tangente au cercle de travail (A) de l'outil de mélange (8a, 8b) respectivement appliqué et est délimité bilatéralement par des zones cintrées de la paroi (5, 105, 205).

8. Mélangeur suivant la revendication 7, **caractérisé en ce que** les méplats (112a, 112b, 212a, 212b) associés à deux cercles de travail (A) voisins sont reliés entre eux dans la zone supérieure de la paroi par l'intermédiaire d'une traverse (112c, 212c).

9. Mélangeur suivant l'une des revendications 1 à 8, **caractérisé en ce que** la paroi (5, 105, 205) est conçue à partir d'au moins deux réservoirs individuels (2a, 2b) comprenant chacun un fond (6) et une paroi (5a, 5b), chaque paroi étant cintrée autour d'un cercle de travail (A), s'inclinant à partir du fond (6) vers le haut et vers l'extérieur pour réaliser une ouverture de chargement (7) agrandie par rapport au fond (6) et étant munie d'un méplat latéral (12, 112, 212), les parois (5a, 5b) étant assemblées en pénétration ou en recoupement mutuel de sorte que les cercles de travail respectifs (A) ne se chevauchent justement pas et qu'il se réalise le dispositif de guidage respectif (15, 115, 215) dans la zone d'encoignure (13) par la paroi (5a, 5b), avec ou sans prolongement (218, 222), en dégageant une ouverture de passage (14).
